# EUROPÄISCHE PATENTSCHRIFT

(11) **EP 3 520 186 B1**
(45) Veröffentlichungstag und Bekanntmachung des Hinweises auf die Patenterteilung: **07.05.2025**
(21) Anmeldenummer: 17777245.6
(22) Anmeldetag: 27.09.2017
(51) Int. Cl.: H02G 3/03, H02G 9/02

(54) **VERFAHREN ZUR VERBESSERUNG DER ELEKTRISCHEN LEITFÄHIGKEIT VON SEEKABELN ZUR ENERGIEÜBERTRAGUNG SOWIE KABELEINFÜHRUNG EINER OFFSHORE-STRUKTUR**
METHOD FOR IMPROVING THE ELECTRICAL CONDUCTIVITY OF SUBMARINE CABLES FOR POWER TRANSMISSION AND CABLE LEAD-IN OF AN OFFSHORE STRUCTURE
PROCÉDÉ D'AMÉLIORATION DE LA CONDUCTIVITÉ ÉLECTRIQUE DE CÂBLES SOUS-MARINS POUR LA TRANSMISSION D'ÉNERGIE ET ENTRÉE DE CÂBLES D'UNE STRUCTURE D'INSTALLATION AU LARGE DES CÔTES

(30) Priorität: 28.09.2016 DE 102016218702
(43) Veröffentlichungstag der Anmeldung: 07.08.2019
(73) Patentinhaber: RWE Offshore Wind GmbH, 45141 Essen (DE)
(72) Erfinder: RUNGE, Jörn, 31608 Marklohe (DE); BARTMINN, Daniel, 25335 Elmshorn (DE)
(74) Vertreter: Keenway Patentanwälte Neumann Heine Taruttis
(86) Internationale Anmeldenummer: PCT/EP2017/074561
(87) Internationale Veröffentlichungsnummer: WO 2018/060293

(56) Entgegenhaltungen:
- WO-A1-2006/069974
- WO-A1-2015/124179
- WO-A2-2012/167015
- DE-A1- 102012 016 670
- DE-A1- 102014 206 000
- DE-A1- 3 012 738
- GB-A- 2 337 366
- US-B1- 6 225 553
- UNKNOWN: "16.2 Electrical Resistance", 5 May 2014 (2014-05-05), XP055918608, Retrieved from the Internet <URL:https://www.tecumseh.k12.oh.us/Downloads/Physics_16_2.pdf> [retrieved on 20220506]
- CHIPPENDALE RICHARD: "Thermal Rating of J tubes using Finite Element Analysis Techniques", 25 June 2015 (2015-06-25), XP055916364, Retrieved from the Internet <URL:http://www.jicable.org/TOUT_JICABLE/2015/2015-B5-4.pdf> [retrieved on 20220428]
- KOMPETENZFELD WINDENERGIE ET AL: "Hier weht der Wind der Zukunft!", 28 November 2011 (2011-11-28), XP055431898, Retrieved from the Internet <URL:https://www.hauff-technik.de/fileadmin/user_upload/news/fachberichte/HAU-ALL-11-5013_Kompetenzbro_DE_hi.pdf> [retrieved on 20171205]
- L. COLLA; M. MARELLI: "Dynamic rating of submarine cables. Application to offshore windfarms", 15 May 2015 (2015-05-15), XP055430654, Retrieved from the Internet <URL:https://www.researchgate.net/profile/Luigi_Colla/publication/276281398_Dynamic_rating_of_submarine_cables_Application_to_offshore_windfarms/links/5555b1c808ae6943a871d46c/Dynamic-rating-of-submarine-cables-Application-to-offshore-windfarms.pdf> [retrieved on 20171130]
- TIMOTHY HUGHES ET AL: "Thermal Ratings of Submarine HV Cables Informed by Environmental Considerations INTRODUCTION", D9.6 9 TH INTERNATIONAL CONFERENCE ON INSULATED POWER CABLES D9.6 JICABLE'15 -VERSAILLES, 25 June 2015 (2015-06-25), XP055430656

## Beschreibung

Die Erfindung betrifft ein Verfahren zur Verbesserung der elektrischen Leitfähigkeit von Seekabeln zur Energieübertragung im Bereich von Hotspots der Seekabel im Bereich von Kabeleinführungen an Offshore-Strukturen sowie eine entsprechende Kabeleinführung einer Offshore-Struktur.

Der mit Seekabeln zur Energieübertragung maximal übertragbare Kabelstrom wird durch die maximale Oberflächentemperatur des Leiters begrenzt. Seekabel dürfen grundsätzlich eine vorgegebene absolute Leitertemperatur im Betrieb nicht überschreiten. Die absolute Leitertemperatur ist normalerweise auf 90°C begrenzt. Diese setzt sich zusammen aus der Umgebungstemperatur und der sogenannten Leiterübertemperatur. Offshore-Strukturen mit elektrischen Einrichtungen zur Energieerzeugung oder zur Transformation als sogenannte "Substations" sind oberhalb der Wasserlinie angeordnet. Die Seekabel werden durch sogenannte J- Tubes in einer Offshore-Struktur, beispielsweise in Form eines Turmbauwerks mit Monopile-Gründung oder in Form einer Plattform mit Jacket-Fundament eingeführt. Hierzu sind an der Offshore-Struktur Kabeleinführungen in Form von Führungsbuchsen, Kabeldurchführungen oder dergleichen vorgesehen.

Als J-Tubes bezeichnet man rohrförmige Vorrichtungen zum Schutz des Seekabels gegen äußere mechanische Einwirkungen.

Aus dem Artikel Chippendale Richard: "Thermal Rating of J tubes using Finite Element Analysis Techniques", 25. Juni 2015 (2015-06-25), XP055916364 wird eine 3D-Analyse zur Beurteilung von Kabeln im Offshore-Bereich mittels finiter Elemente beschrieben. Dabei wird das thermische Profil des Kabels untersucht.

Die US 6,225,553 B1 bezieht sich auf Mittel und Verfahren zur Erhöhung der Nennleistung eines Offshore-Hochspannungsstromkabels, das den Durchgang des Kabels vom Meer zu einer Plattform durch eine Biegezugentlastung (BSR) umfasst.

Die WO 2012/167 015 A2 richtet sich auf Hybridsysteme und -verfahren zur Energieerzeugung aus Wind- und Wellenkraft und insbesondere auf Konstruktionen von Offshore-Windwellenkraftwerken.

Im Bereich der Kabeleinführung der Offshore-Struktur sind die Seekabel normalerweise Umgebungstemperaturen ausgesetzt, die höher sind als unterhalb der Wasserlinie. Bereits bei Umgebungstemperaturen von über 20 °C sind gegebenenfalls bereits Maßnahmen einzuleiten, um die Leitertemperatur zu begrenzen, beispielsweise durch Reduzierung der durch das Seekabel transportierten elektrischen Leistung.

Übergangsbereiche der Seekabel, in denen diese einer erhöhten Temperatur ausgesetzt sind, werden im Allgemeinen und auch im Folgenden als Hotspots bezeichnet.

Solche Hotspots führen zur Reduzierung des maximal zulässigen Stroms in dem betreffenden Leiter. Eine solche Reduzierung ist grundsätzlich unerwünscht. Der Erfindung liegt daher die Aufgabe zugrunde, dem Rechnung zu tragen.

Die Aufgabe wird gelöst durch ein Verfahren nach Anspruch 1 sowie durch eine Kabeleinführung einer Offshore-Struktur nach Anspruch 2.

Nach einem Gesichtspunkt der Erfindung ist ein Verfahren mit den Merkmalen von Anspruch 1 vorgesehen.

Eine Offshore-Struktur im Sinne der vorliegenden Erfindung kann beispielsweise ein Turmbauwerk für einen Windkraftgenerator oder eine Plattform mit einer elektrischen Installation, beispielsweise in Form einer sogenannten Substation sein. Die Kabeleinführung kann beispielsweise an einem Monopile eines Turmbauwerks vorgesehen sein, alternativ kann die Kabeleinführung an einem Übergangsstück (Transition Piece) vorgesehen sein, welches auf einem Jacket-Fundament oder einem Monopile aufgestellt ist. Die Art der Gründung und die Art der Offshore-Struktur sind für die vorliegende Erfindung nicht kritisch.

Wie vorstehend bereits erwähnt, ist im Sinne der vorliegenden Erfindung unter einem Hotspot ein Bereich eines Seekabels zu verstehen, der einer erhöhten Umgebungstemperatur ausgesetzt ist und der insbesondere hinsichtlich der maximal zulässigen Leitertemperatur kritisch ist.

Bei einer nicht zum Schutzumfang gehörenden Variante des Verfahrens ist eine passive Wasserkühlung im Bereich einer Kabeleinführung in die Offshore-Struktur vorgesehen, insbesondere in einer Kabeldurchführung einer Vorrichtung zum Schutz des Seekabels gegen äußere mechanische Einwirkungen. Diese Vorrichtung wird im Fachjargon auch als sogenanntes J-Tube bezeichnet. Es handelt sich dabei um einen Rohrabschnitt eines Führungsrohrs für das Seekabel, der beispielsweise j -förmig gebogen ist, um dem Seekabel einen vorgegebenen maximalen Biegeradius aufzugeben. Eine passive Wasserkühlung im Bereich einer Kabeldurchführung kann beispielsweise dadurch gewährleistet werden, dass ein Führungsstopfen für wenigstens ein Seekabel im Bereich des J- Tube-Entry-Hole wasserdurchlässig ausgebildet ist. Dieser Führungsstopfen kann beispielsweise Löcher aufweisen, die eine Meerwasser- bzw. Seewasserzirkulation im Bereich der Kabeldurchführung ermöglichen. Insbesondere im Bereich von Kabeldurchführungen ist durch eine Einspannung des Seekabels sonst die Wärmeabfuhr des Seekabels durch entsprechende Kabelführungen behindert.

Bei einer weiteren nicht zum Schutzumfang gehörenden Variante des Verfahrens kann eine aktive Kühlung des Seekabels durch Meerwasserzirkulation durch eine Vorrichtung zum Schutz des Seekabels gegen äußere mechanische Einwirkungen vorgesehen sein. Es kann beispielsweise erfindungsgemäß vorgesehen sein, Meerwasser aktiv durch das J-Tube zu zirkulieren. Wenn die Offshore-Struktur eine sogenannte Substation (Transformatorstation) aufnimmt, kann das Kühlsystem der Substation zur aktiven Kühlung des Hotspots verwendet werden.

Bei einer anderen nicht zum Schutzumfang gehörenden Variante des Verfahrens ist vorgesehen, dass im Bereich der Kabeleinführung des Seekabels eine Wärmeabfuhr des Seekabels dadurch bewirkt wird, dass eine mechanische Wärmeleitverbindung des Seekabels mit einem Fundament der Offshore-Struktur als Wärmesenke hergestellt wird.

Das Verfahren gemäß der Erfindung kann sowohl für ein einziges als auch für mehrere Seekabel an einer Offshore-Struktur Anwendung finden.

Die mechanische Wärmeleitverbindung des Seekabels mit der Wärmesenke wird erfindungsgemäß mittels einer Manschette aus einem wärmeleitfähigen Material bewirkt, die im Bereich des Hotspots das Seekabel umgreift und die in direktem wärmeleitenden Kontakt mit dem Seekabel ist. Die Wärme kann dann über ein Wärmeleitelement abgeführt werden, beispielsweise in Form eines Seils, Kabels oder einer Stange, die mit der Wärmesenke, beispielsweise mit dem Fundament der Offshore- Struktur, verbunden ist.

Nach einem weiteren nicht zum Schutzumfang gehörenden Gesichtspunkt kann vorgesehen sein, dass im Bereich der Kabeleinführung ein Wärmetausch mit Meerwasser unter Verwendung wenigstens eines Wärmetauschers oder wenigstens eines Wärmetauscherkörpers bewirkt wird. Ein solcher Wärmetauscher kann beispielsweise als Wärmeleitkörper mit einer vergrößerten Oberfläche ausgebildet sein. Der Wärmeleitkörper kann in unmittelbar wärmeleitendem Kontakt mit dem Seekabel sein. Das Seekabel umfasst vorzugsweise einen oder mehrere elektrische Leiter und wenigstens eine die Leiter umschließende Isolation. Wenn vorstehend davon die Rede ist, dass das Seekabel in wärmeleitendem Kontakt mit einem Wärmetauscherkörper oder einer Manschette ist, so ist damit ein Kontakt der Isolation des Seekabels mit der Manschette oder dem Wärmetauscherkörper gemeint.

Die vorstehend beschriebenen Verfahrensmerkmale können jeweils für sich genommen, aber auch in beliebiger Kombination miteinander, durchgeführt werden.

Die Erfindung umfasst weiterhin eine Offshore-Struktur mit einer Kabeleinführung mit den Merkmalen von Anspruch 2.

Eine nicht zum Schutzumfang gehörenden Variante der Kabeleinführung zeichnet sich dadurch aus, dass die Kabeldurchführung wenigstens einen mit Meerwasser durchflutbaren Führungsstopfen aufweist. Eine solche Kabeldurchführung wird auch als sogenanntes J-Tube-Entry- Hole bezeichnet.

Bei einer nicht zum Schutzumfang gehörenden Variante der Kabeleinführung ist vorgesehen, dass das Seekabel wenigstens eine Verbindungs- und Übergangsmuffe aufweist, mittels derer einer oder mehrere Leiter des Seekabels mit einem ersten kleineren Querschnitt und/oder aus einem Material mit einer ersten geringeren Leitfähigkeit mit einem Abschnitt eines oder mehrerer Leiter mit einem zweiten größeren Querschnitt und/oder aus einem Material mit einer zweiten größeren Leitfähigkeit verbunden sind.

So kann beispielsweise vorgesehen sein, dass abschnittsweise der Querschnitt der Leiter erhöht wird, wodurch sich eine geringere Leiteroberflächentemperatur und eine bessere Leitfähigkeit einstellt. Alternativ oder zusätzlich kann vorgesehen sein, das Seekabel abschnittsweise aus einem Material mit einer höheren Leitfähigkeit auszustatten, beispielsweise im Bereich des Hotspots, so dass der elektrische Widerstand des Seekabels im Bereich des Hotspots reduziert wird und somit auch die erzeugte Verlustwärme geringer ist. Beispielsweise kann das Seekabel im Bereich des Hotspots als Kupferkabel ausgestattet sein, wohingegen derjenige Teil des Seekabels, der sich unter dem Meeresspiegel befindet, als Aluminiumkabel ausgebildet sein kann.

Alternativ kann vorgesehen sein, eine Verbindungs- und Übergangsmuffe im Bereich eines Hotspots vorzusehen. Innerhalb der Verbindungs- und Übergangsmuffe kann beispielsweise der Leiterquerschnitt verdoppelt sein, beispielsweise dadurch, dass die Leiter nicht stoßweise miteinander in elektrisch leitendem Kontakt angeordnet sind, sondern dass die Leiter innerhalb der Verbindungs- und Übergangsmuffe aufeinanderliegend angeordnet sind, so dass der Querschnitt wenigstens verdoppelt wird. Solche Verbindungs- und Übergangsmuffen werden im Fachjargon auch als sogenannte "Factory Joints" bezeichnet.

Weiterhin ist es in einer nicht zum Schutzumfang gehörenden Ausgestaltung möglich, dass beispielsweise im Bereich des Hotspots ein Seekabel-Abschnitt vorgesehen ist, der einen höheren Leitwert oder einen größeren Leiterquerschnitt aufweist. Dieser Seekabelabschnitt kann zwischen zwei Verbindungs- und Übergangsmuffen angeordnet sein.

Bei der erfindungsgemäßen Variante der Kabeleinführung ist vorgesehen, dass wenigstens eine Manschette vorgesehen ist, die das Seekabel thermisch leitend umschließt und die über einen Wärmeleiter mit dem Fundament der Offshore-Struktur verbunden ist. Die Manschette selbst kann eine vergrößerte Oberfläche aufweisen und somit als Wärmetauscher ausgebildet sein.

Alternativ kann vorgesehen sein, dass die Verbindungs- und Übergangsmuffe selbst die Funktion einer wärmeleitenden Manschette übernimmt und dass diese über einen Wärmeleiter mit einer Wärmesenke oder mit dem Fundament der Offshore-Struktur als Wärmesenke verbunden ist.

Nach einem anderen nicht zum Schutzumfang gehörenden Gesichtspunkt kann vorgesehen sein, dass die Vorrichtung zum Schutz des Seekabels gegen äußere mechanische Einwirkungen an einen vorzugsweise offenen Meerwasserkühlkreislauf angeschlossen ist.

Die vorstehend beschriebenen Merkmale der Kabeleinführung gemäß der Erfindung können jeweils für sich genommen oder auch in Kombination miteinander vorgesehen sein.

Ein nicht zum Schutzumfang gehörendes Ausführungsbeispiel wird nachstehend unter Bezugnahme auf die beigefügten Zeichnungen erläutert. Es zeigen:
Figur 1 eine schematische Darstellung einer Verbindungs- und Übergangsmuffe eines Seekabels einer Kabeleinführung nach einem ersten nicht zum Schutzumfang gehörenden Ausführungsbeispiel,
Figur 2 eine schematische Darstellung eines Seekabels gemäß einem zweiten nicht zum Schutzumfang gehörenden Ausführungsbeispiel der Kabeleinführung und
Figur 3 eine schematische Darstellung eines Seekabels nach einem zweiten Ausführungsbeispiel der Kabeleinführung.

In den Figuren ist lediglich die Verbindungs- und Übergangsmuffe 1 des Seekabels 2 dargestellt. Bei den dargestellten Ausführungsbeispielen ist die Verbindungs- und Übergangsmuffe 1 zwischen zwei Seekabel-Abschnitten 3 des Seekabels 2 vorgesehen. Die Verbindungs- und Übergangsmuffe 1 befindet sich im Bereich einer nicht dargestellten Kabeleinführung einer Offshore-Struktur.

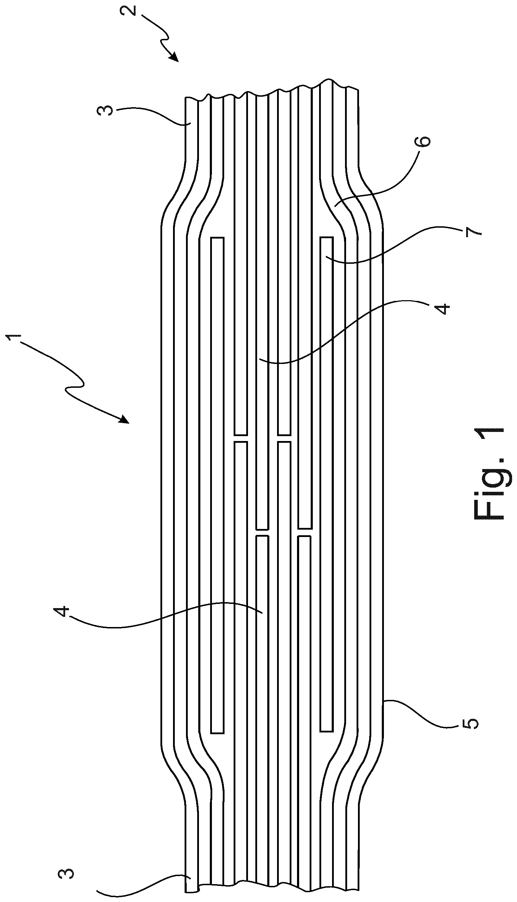

Das Seekabel 2 umfasst eine Vielzahl von Leitern 4, die im Falle des Ausführungsbeispiels gemäß Figur 1 stoßweise aneinandergefügt sind, um so eine elektrische Verbindung zwischen beiden Seekabel-Abschnitten 3 herzustellen. Die Übergangs- und Verbindungsmuffe 1 umfasst von außen nach innen betrachtet einen Mantel 5 aus einem vernetzten Polyethylen, eine erste Manschette 6 aus einem Siliziumkarbid und eine zweite Manschette 7 aus Kupfer. Die Leiter 4 bestehen vorzugsweise aus Aluminium. Mittels der zweiten Manschette 7, die die stoßweise aneinandergefügten Leiter 4 unmittelbar umschließt, wird einerseits die elektrische Leitfähigkeit und andererseits die thermische Leitfähigkeit der von der Übergangs -und Verbindungsmuffe 1 Leiter 4 verbessert.

Bei dem Ausführungsbeispiel gemäß Figur 1 sind die Leiter 4 mit an unterschiedlichen Stellen angeordneten Einzelstoßpunkten vorgesehen, sodass die Einzelstoßpunkte nach Art eines Mauerverbundes versetzt zueinander angeordnet sind.

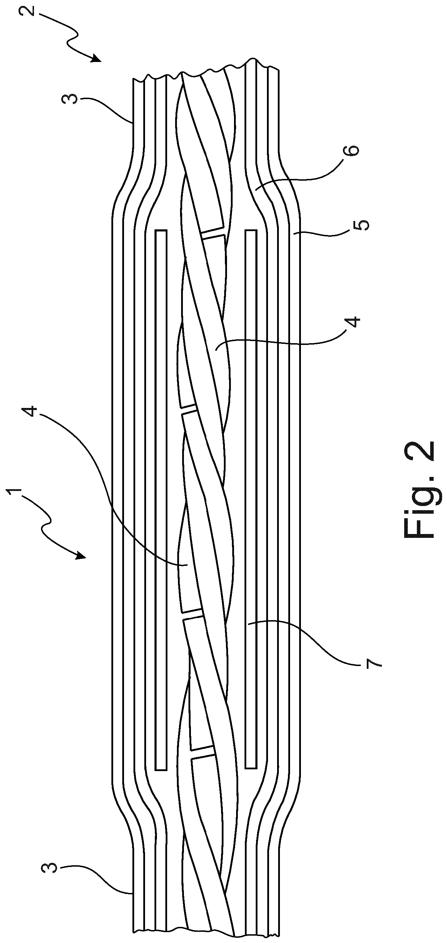

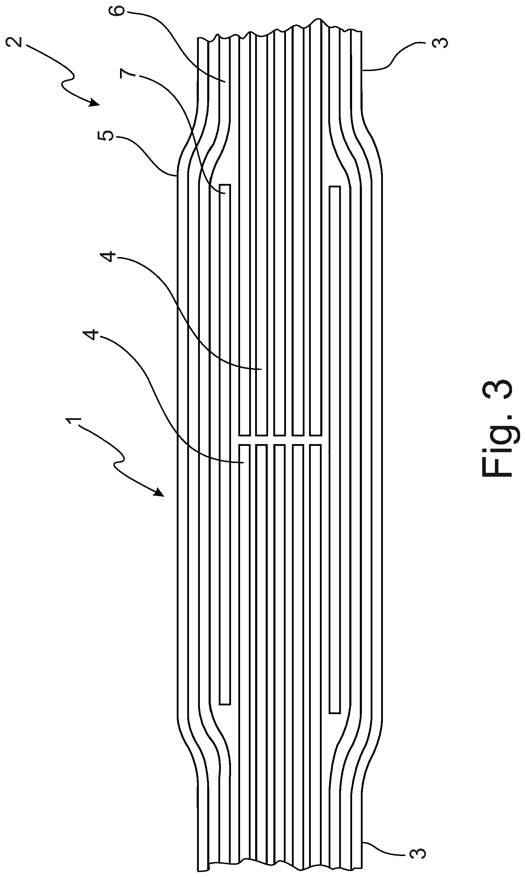

Das Ausführungsbeispiel gemäß Figur 3 entspricht demjenigen gemäß Figur 1, mit dem Unterschied, dass die Einzelstoßpunkte der Leiter 4 alle in einer Querschnittsebene angeordnet sind. Im Übrigen sind gleiche Elemente mit gleichen Bezugszeichen versehen. Das Ausführungsbeispiel gemäß Figur 2 unterscheidet sich von denjenigen gemäß der Figuren 1 und 3 dadurch, dass die Leiter 4 mit versetzt zueinander angeordneten Einzelstoßpunkten untereinander verdrillt sind, was die elektrische Leitfähigkeit erhöht. Im Übrigen entspricht das Ausführungsbeispiel gemäß Figur 2 denjenigen gemäß den Figuren 1 und 3. Gleiche Teile sind mit gleichen Bezugszeichen versehen.

### Bezugszeichenliste

- 1: Verbindungs- und Übergangsmuffe 2 Seekabel
- 3: Seekabel-Abschnitte
- 4: Leiter
- 5: Mantel
- 6: erste Manschette,
- 7: zweite Manschette

## Patentansprüche

1. Verfahren zur Verbesserung der elektrischen Leitfähigkeit von Seekabeln zur Energieübertragung im Bereich von Hotspots der Seekabel im Bereich von Kabeleinführungen an Offshore-Strukturen, wobei das Verfahren eine Begrenzung der maximalen Oberflächentemperatur eines oder mehrerer Leiter des Seekabels durch Anschließen einer Wärmesenke im Bereich eines Hotspots umfasst,
**dadurch gekennzeichnet, dass** im Bereich der Kabeleinführung eine Wärmeabfuhr des Seekabels dadurch bewirkt wird, dass eine mechanische Wärmeleitverbindung des Seekabels mit einem Fundament der Offshore-Struktur hergestellt wird, und dass die mechanische Wärmeleitverbindung mittels einer Manschette aus einem wärmeleitfähigen Material bewirkt wird, die das Seekabel umgreift und die in direktem wärmeleitenden Kontakt mit dem Seekabel ist.

2. Offshore-Struktur mit einer Kabeleinführung umfassend wenigstens ein Seekabel (2), eine Kabeldurchführung in die Struktur und eine Vorrichtung zum Schutz des Seekabels (2) gegen äußere mechanische Einwirkungen, mit einer mechanischen Wärmeleitverbindung an ein Fundament der Offshore-Struktur als einer entfernt angeordneten Wärmesenke als Mittel zur Begrenzung der maximalen Oberflächentemperatur eines oder mehrerer Leiter (4) des Seekabels, **gekennzeichnet durch** wenigstens eine Manschette, aus einem wärmeleitfähigen Material , die das Seekabel (2) umschließt und die in direktem wärmeleitenden Kontakt mit dem Seekabel (2) ist und die über einen Wärmeleiter mit dem Fundament der Offshore-Struktur verbunden ist.

## Claims

1. Method for improving the electrical conductivity of submarine cables for transmission of energy in the region of hotspots of the submarine cables in the region of cable entries at offshore structures, wherein the method comprises limiting the maximum surface temperature of one or more conductors of the submarine cable by connection of a heat sink in the region of a hotspot,
**characterized in that**, in the region of the cable entry, removal of heat from the submarine cable is brought about in that a mechanical thermally conductive connection of the submarine cable to a foundation of the offshore structure is produced, and **in that** the mechanical thermally conductive connection is brought about by means of a sleeve composed of a thermally conductive material that engages around the submarine cable and that is in direct thermally conductive contact with the submarine cable.

2. Offshore structure with a cable entry comprising at least one submarine cable (2), a cable leadthrough into the structure and a device for protecting the submarine cable (2) against external mechanical effects, with a mechanical thermally conductive connection to a foundation of the offshore structure, as a remotely arranged heat sink, as a means for limiting the maximum surface temperature of one or more conductors (4) of the submarine cable, **characterized by** at least one sleeve composed of a thermally conductive material that surrounds the submarine cable (2) and that is in direct thermally conductive contact with the submarine cable (2) and that is connected to the foundation of the offshore structure via a heat conductor.

## Revendications

1. Procédé permettant d'améliorer la conductivité électrique de câbles sous-marins pour la transmission d'énergie au niveau de points critiques des câbles sous-marins au niveau des entrées de câble sur des structures en mer, dans lequel le procédé comprend une limitation de la température de surface maximale d'un ou de plusieurs conducteurs du câble sous-marin en le reliant à un dissipateur thermique au niveau d'un point critique, **caractérisé en ce qu'**au niveau de l'entrée de câble, une dissipation de chaleur du câble sous-marin est provoquée en ce qu'une liaison de conduction thermique mécanique du câble sous-marin avec une base de la structure en mer est établie, et **en ce que** la liaison de conduction thermique mécanique est provoquée au moyen d'un manchon en matériau thermiquement conductible qui entoure le câble sous-marin et qui est en contact thermoconducteur direct avec le câble sous-marin.

2. Structure en mer pourvue d'une entrée de câble, comprenant au moins un câble sous-marin (2), un passage de câble dans la structure et un dispositif pour protéger le câble sous-marin (2) des effets mécaniques extérieurs, avec une liaison de conduction thermique mécanique avec une base de la structure en mer sous forme de dissipateur thermique disposé à distance comme moyen de limitation de la température de surface maximale d'un ou de plusieurs conducteurs (4) du câble sous-marin, **caractérisée par** au moins un manchon d'un matériau à conductibilité thermique qui entoure le câble sous-marin (2) et qui est en contact thermoconducteur direct avec le câble sous-marin (2) et est relié par l'intermédiaire d'un conducteur thermique à la base de la structure en mer.
